(19) Europäisches Patentamt
European Patent Office
Office européen des brevets

(11) EP 3 035 089 B1

(12) **EUROPEAN PATENT SPECIFICATION**

(45) Date of publication and mention of the grant of the patent:
**21.03.2018 Bulletin 2018/12**

(51) Int Cl.:
***G02B 1/04*** (2006.01) ***G02B 5/30*** (2006.01)

(21) Application number: **15198501.7**

(22) Date of filing: **08.12.2015**

(54) **POLARIZING FILM AND DISPLAY DEVICE INCLUDING THE POLARIZING FILM**

POLARISATIONSFOLIE UND ANZEIGEVORRICHTUNG MIT DER POLARISATIONSFOLIE

FILM DE POLARISATION ET DISPOSITIF D'AFFICHAGE COMPRENANT LE FILM POLARISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2014 KR 20140182301**

(43) Date of publication of application:
**22.06.2016 Bulletin 2016/25**

(73) Proprietors:
- **Samsung Electronics Co., Ltd.**
  **Gyeonggi-do 16677 (KR)**
- **Samsung SDI Co., Ltd.**
  **Gyeonggi-do 17084 (KR)**

(72) Inventors:
- **FANG, Feifei**
  **Gyeonggi-do (KR)**
- **KIM, Beom Seok**
  **Seoul (KR)**
- **YOON, Seong-Jun**
  **Gyeonggi-do (KR)**
- **LEE, Dong Yun**
  **Gyeonggi-do (KR)**
- **JEONG, Boreum**
  **Daejeon (KR)**
- **JUNG, Myung-Sup**
  **Gyeonggi-do (KR)**
- **CHANG, Won Suk**
  **Gyeonggi-do (KR)**

(74) Representative: **Mullen, Lee Bryan et al**
**Elkington and Fife LLP**
**Thavies Inn House**
**3-4 Holborn Circus**
**London EC1N 2HA (GB)**

(56) References cited:
**US-A1- 2012 050 652** **US-A1- 2014 124 714**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 035 089 B1

## Description

FIELD OF THE INVENTION

A composition for forming a polarizing film, a polarizing film formed from such a composition and a display device including the polarizing film are disclosed.

BACKGROUND OF THE INVENTION

A display device such as a liquid crystal display (LCD) and an organic light emitting diode (OLED) includes a polarizing plate attached to the outside of the display panel. The polarizing plate only transmits light of a specific wavelength and absorbs or reflects light of any other wavelength, thereby controlling the direction of incident light on the display panel or light emitted from the display panel.

The polarizing plate generally includes a polarizer and a protective layer for the polarizer. The polarizer may be formed of, for example, polyvinyl alcohol and the protective layer may be formed of, for example, triacetyl cellulose (TAC).

However, the process of fabrication of the polarizing plate including the polarizer and the protective layer is not only complicated and expensive, but also results in production of a thick polarizing plate which leads to an increased thickness of a display device. Accordingly, there remains a need for a polarizing film that does not require a protective layer.

US 2014/124714 discloses a polarizing film including a polyolefin and a dichroic dye having a solubility parameter difference between the polyolefin and the dichroic dye of less than 7.4, and a display device including the polarizing film.

US 201/2050652 discloses a composition for a polarization film including a polyolefin component including polypropylene and a polyethylene-polypropylene copolymer; and a dichroic dye.

SUMMARY OF THE INVENTION

An embodiment provides a polarizing film having improved orientation of a dichroic dye at high-temperature elongation without migration of the dichroic dye, and having high polarization efficiency and transmittance and excellent workability.

Another embodiment provides a display device including the polarizing film.

Yet another embodiment provides a composition for a polarizing film.

According to some embodiments, a polarizing film includes a high-temperature elongation film of a polyolefin and a dichroic dye, wherein the polyolefin has zero shear viscosity ($\eta_0$) of 2600 Pa · s to 17400 Pa · s, for example 2600 Pa · s to 12000 Pa · s, for another example 2600 Pa · s to 8500 Pa · s, at a temperature of about 210 °C (±3 °C).

The polyolefin may have complex viscosity ($\eta$*) satisfying the following Equation 1.

Equation 1

$$\frac{2600}{1+(k_1\omega)^{m_1}} \leq \eta* \leq \frac{17400}{1+(k_2\omega)^{m_2}}$$

In Equation 1,

$\omega$ is an angular frequency of a rotational rheometer, $k_1$ is a constant of about 0.108 to about 0.132, $k_2$ is a constant of about 0.738 to about 0.902, $m_1$ ranges from about 0.477 to about 0.583, and $m_2$ ranges from about 0.522 to about 0.638.

For example, the polyolefin may have complex viscosity satisfying the following Equation 1-1 or Equation 1-2.

Equation 1-1

$$\frac{2600}{1+(k_1\omega)^{m_1}} \leq \eta* \leq \frac{12000}{1+(k_2\omega)^{m_2}}$$

In Equation 1-1,

ω is an angular frequency of a rotational rheometer, $k_1$ is a constant of about 0.108 to about 0.132, $k_2$ is a constant of about 1.071 to about 1.309, $m_1$ ranges from about 0.477 to about 0.583, and $m_2$ ranges from about 0.468 to about 0.572.

Equation 1-2

$$\frac{2600}{1+(k_1\omega)^{m_1}} \leq \eta^* \leq \frac{8500}{1+(k_2\omega)^{m_2}}$$

In Equation 1-2,

ω is an angular frequency of a rotational rheometer, $k_1$ is a constant of about 0.108 to about 0.132, $k_2$ is a constant of about 0.603 to about 0.737, $m_1$ ranges from about 0.477 to about 0.583, and $m_2$ ranges from about 0.54 to about 0.66.

The polyolefin may have yield stress of about 2600 Pa to about 8700 Pa.

The polyolefin may include polypropylene (PP), a polyethylene copolymer, a polypropylene copolymer, a polyethylene-polypropylene copolymer, or a mixture thereof.

The polyolefin may be a mixture of polypropylene and a polyethylene-polypropylene (PE-PP) copolymer, and the polyethylene-polypropylene (PE-PP) copolymer may have an ethylene content of about 1 percent by weight (wt%) to about 50 wt%.

The polyolefin may have a melt flow index (MFI) of about 3 grams per 10 minutes (g/10 min) to 11 g/10 min.

The polypropylene may have a melt flow index of about 3 g/10 min to about 10 g/10 min, and the polyethylene-polypropylene copolymer may have a melt flow index of about 5 g/10 min to about 16 g/10 min.

The polyolefin may include the polypropylene and the polyethylene-polypropylene copolymer in a weight ratio of about 1:9 to about 9:1.

The dichroic dye may be dispersed in the polyolefin, and the polyolefin may be elongated in a uniaxial direction at an elongation rate of about 400 to about 1,300 %.

The polarizing film may have haze ranging from less than or equal to about 5 %, for example about 0.5 % to about 4.5 %, for another example about 0.5 % to about 3.5 %.

The polarizing film may have a dichroic ratio of about 2 to about 14 in a visible ray wavelength region of about 380 nm to about 780 nm.

The dichroic dye may be included in an amount of about 0.1 to 10 parts by weight, for example about 0.5 to 5 parts by weight, based on 100 parts by weight of the polyolefin.

The polarizing film may have polarization efficiency of greater than or equal to about 95 %, for example about 95 % to about 99.9 %.
According to another embodiment, an anti-reflective film including the polarizing film and a phase retardation film is provided.

According to another embodiment, a display device including the polarizing film is provided.

According to yet another embodiment, a display device including the anti-reflective film is provided

.According to yet another embodiment, a composition for a polarizing film includes a polyolefin and a dichroic dye, wherein the polyolefin has zero shear viscosity ($\eta_0$) of 2600 Pa · s to 17400 Pa · s, for example 2600 Pa · s to -12000 Pa · s, for another example 2600 Pa · s to 8500 Pa · s, at a temperature of about 210 °C (±3 °C).

The polyolefin may have complex viscosity (η*) satisfying the following Equation 1.

Equation 1

$$\frac{2600}{1+(k_1\omega)^{m_1}} \leq \eta^* \leq \frac{17400}{1+(k_2\omega)^{m_2}}$$

In Equation 1,

$\omega$ is an angular frequency of a rotational rheometer, $k_1$ is a constant of about 0.108 to about 0.132, $k_2$ is a constant of about 0.738 to about 0.902, $m_1$ ranges from about 0.477 to about 0.583, and $m_2$ ranges from about 0.522 to about 0.638

For example, the polyolefin may have complex viscosity satisfying the following Equation 1-1 or Equation 1-2.

Equation 1-1

$$\frac{2600}{1+(k_1\omega)^{m_1}} \leq \eta * \leq \frac{12000}{1+(k_2\omega)^{m_2}}$$

Equation 1-2

$$\frac{2600}{1+(k_1\omega)^{m_1}} \leq \eta * \leq \frac{8500}{1+(k_2\omega)^{m_2}}$$

In Equation 1-1,

$\omega$ is an angular frequency of a rotational rheometer, $k_1$ is a constant of about 0.108 to about 0.132, $k_2$ is a constant of about 1.071 to about 1.309, $m_1$ ranges from about 0.477 to about 0.583, and $m_2$ ranges from about 0.468 to about 0.572.

In Equation 1-2,

$\omega$ is an angular frequency of a rotational rheometer, $k_1$ is a constant of about 0.108 to about 0.132, $k_2$ is a constant of about 0.603 to about 0.737, $m_1$ ranges from about 0.477 to about 0.583, and $m_2$ ranges from about 0.54 to about 0.66.

The polyolefin may have yield stress of about 2600 Pa to about 8700 Pa, for example about 2691 Pa to about 8681 Pa.

The polarizing film may have haze ranging from less than or equal to about 5 %, for example about 0.5 % to about 4.5 %, for another example about 0.5 % to about 3.5 %.

The polyolefin may include polypropylene, a polyethylene copolymer, a polypropylene copolymer, a polyethylene-polypropylene copolymer, or a mixture thereof.

The polyolefin may be a mixture of polypropylene and a polyethylene-polypropylene copolymer, and the polyethylene-polypropylene copolymer may have an ethylene content of about 1 to about 50 wt%.

The polyolefin may have a melt flow index of about 3 g/10 min to about 11 g/10 min.

The polypropylene may have a melt flow index of about 3 g/10 min to about 10 g/10 min, and the polyethylene-polypropylene copolymer may have a melt flow index of about 5 g/10 min to about 16 g/10 min.

The polyolefin may include the polypropylene and the polyethylene-polypropylene copolymer in a weight ratio of about 1:9 to about 9:1.

The polarizing film may have a dichroic ratio of about 2 to about 14 in a visible ray wavelength region of about 380 nm to about 780 nm.

The dichroic dye may be included in an amount of about 0.1 to 10 parts by weight, for example about 0.5 to 5 parts by weight, based on 100 parts by weight of the polyolefin.

The composition for a polarizing film may have a solid content of greater than or equal to about 90 wt%.

In some embodiments, the composition for a polarizing film is prepared without added solvent, i.e. is solvent-free.

BRIEF DESCRIPTION OF THE DRAWINGS

These and/or other aspects will become apparent and more readily appreciated from the following description of the embodiments, taken in conjunction with the accompanying drawings in which:

FIG. 1 is a schematic view showing a polarizing film according to an embodiment;
FIG. 2 is a cross-sectional view showing an anti-reflective film according to an embodiment;
FIG. 3 is a schematic diagram showing the anti-reflection principle of an anti-reflective film;
FIG. 4 is a cross-sectional view showing a liquid crystal display (LCD) according to an embodiment;
FIG. 5 is a cross-sectional view of an organic light emitting diode (OLED) display according to an embodiment; and
FIG. 6 is a graph showing viscosity profiles of polyolefins according to sample numbers 1 to 8.

DETAILED DESCRIPTION OF THE EMBODIMENTS

Exemplary embodiments will hereinafter be described in detail, and may be easily performed by those who have common knowledge in the related art. However, this disclosure may be embodied in many different forms and is not construed as limited to the exemplary embodiments set forth herein; rather, these embodiments are provided so that this disclosure will fully convey the scope of the disclosure to those skilled in the art. Thus, in some exemplary embodiments, well known technologies are not specifically explained to avoid ambiguous understanding of the present inventive concept. Accordingly, the exemplary embodiments are merely described below, by referring to the figures, to explain aspects of the present inventive concept.

In the drawings, the thickness of layers, films, panels, regions, etc., are exaggerated for clarity. Like reference numerals designate like elements throughout the specification.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

As used herein, when a definition is not otherwise provided, the term "substituted" refers to a compound or functional group wherein at least one hydrogen of the compound or functional group is replaced with at least one substituent selected from a halogen (F, Br, Cl, or I), a C1 to C20 alkoxy group, a cyano group, an amino group, a C1 to C20 ester group, a C1 to C20 alkyl group, a C6 to C20 aryl group, a C2 to C20 alkenyl group, a C2 to C20 alkynyl group, and a combination thereof.

Technology for manufacturing a thin polarizing film needing no protective layer by high temperature-elongating a mixture of a polyolefin and a dichroic dye is known. However, depending on the viscosity of the polyolefin, such technology results in a polarizing film having deteriorated properties. For example, when the viscosity of the polyolefin is increased, the alignment of the dichroic dye is improved, but workability during manufacture of the film is deteriorated due to the difficulty of compounding the polyolefin and forming the film through extrusion. On the other hand, when the viscosity of the polyolefin is decreased, workability may be satisfactory, but the alignment of the dichroic dye may be deteriorated due to migration of the dichroic dye. Accordingly, the viscosity of the polyolefin should be appropriately adjusted in order to improve haze and workability of the polarizing film and alignment and migration of the dichroic dye.

In an embodiment, a polyolefin having zero shear viscosity ($\eta_0$) within a predetermined range is used for a polarizing film, and thus may improve optical properties of the polarizing film such as polarizing efficiency, haze, and the like, while at the same time reducing migration of the dichroic dye and improving alignment of the dichroic dye. Such materials can further secure excellent workability of the film during the manufacturing process.

Hereinafter, a polarizing film according to an embodiment is described referring to drawings.

FIG. 1 is a schematic view showing a polarizing film according to an embodiment.

Referring to FIG. 1, a polarizing film 20 according to an embodiment includes a high-temperature elongation film of a polyolefin 21 and a dichroic dye 22. The polyolefin 21 and the dichroic dye 22 provide a single film having an integrated structure of the polyolefin 21 and the dichroic dye 22 through a high-temperature elongation process.

The polyolefin 21 has zero shear viscosity ($\eta_0$) of about 2600 Pa · s to about 17400 Pa · s, for example about 2600 Pa · s to about 12000 Pa · s, for another example about 2600 Pa · s to about 8500 Pa · s, at a temperature of about 210 °C (±3 °C).

When the zero shear viscosity is within the range, a polarizing film having excellent optical properties such as polarization efficiency, haze, and the like and excellent workability is provided by minimizing migration of a dichroic dye and improving alignment of the dichroic dye.

The zero shear viscosity indicates viscosity at an angular frequency of 0, and is a parameter obtained through an analysis program installed in a rotational rheometer with data points of frequency sweep measured in an angular frequency range by using the rotational rheometer.

The frequency sweep is measured at 210 °C (±3 °C) by using the rotational rheometer and setting it to have a gap of about 1.0 mm between upper and lower plates, a diameter of a rotary plate of about 8 mm, and strain of about 1 %.

The rotational rheometer may be a viscoelasticity measuring device, Physica MCR 501 (Anton Paar Corp. Germany).

The polyolefin 21 may have complex viscosity ($\eta^*$) satisfying the following Equation 1.

Equation 1

$$\frac{2600}{1+(k_1\omega)^{m_1}} \leq \eta * \leq \frac{17400}{1+(k_2\omega)^{m_2}}$$

In Equation 1,

ω is an angular frequency of a rotational rheometer, $k_1$ is a constant of about 0.108 to about 0.132, $k_2$ is a constant of about 0.738 to about 0.902, $m_1$ ranges from about 0.477 to about 0.583, and $m_2$ ranges from about 0.522 to about 0.638.

The viscosity profiles satisfying the Equation 1 are shown in FIG. 6. FIG. 6 shows viscosity profiles of polyolefins having zero shear viscosity of about 2600 Pa · s ($\eta_0$) to about 17400 Pa · s ($\eta_0$). The complex viscosity satisfying the Equation 1 is positioned within the two solid lines, including the upper solid line and the lower solid line in FIG. 6.

For example, the polyolefin 21 may have complex viscosity satisfying the following Equation 1-1 or Equation 1-2.

Equation 1-1

$$\frac{2600}{1+(k_1\omega)^{m_1}} \leq \eta * \leq \frac{12000}{1+(k_2\omega)^{m_2}}$$

Equation 1-2

$$\frac{2600}{1+(k_1\omega)^{m_1}} \leq \eta * \leq \frac{8500}{1+(k_2\omega)^{m_2}}$$

In Equation 1-1,

ω is an angular frequency of a rotational rheometer, $k_1$ is a constant of about 0.108 to about 0.132, $k_2$ is a constant of about 1.071 to about 1.309, $m_1$ ranges from about 0.477 to about 0.583, and $m_2$ ranges from about 0.468 to about 0.572.

In Equation 1-2,

ω is an angular frequency of a rotational rheometer, $k_1$ is a constant of about 0.108 to about 0.132, $k_2$ is a constant of about 0.603 to about 0.737, $m_1$ ranges from about 0.477 to about 0.583, and $m_2$ ranges from about 0.54 to about 0.66.

The polyolefin 21 may have yield stress of about 2600 Pa to about 8700 Pa, for example about 2691 Pa to about 8681 Pa. When the yield stress is within this range, a polarizing film having excellent optical properties such as polarization efficiency, haze, and the like and excellent film workability may be provided by reducing migration of a dichroic dye and improving alignment of the dichroic dye.

The polarization film 20 may have haze ranging from less than or equal to about 5 %, for example about 0.5 % to about 4.5 %, for another example about 0.5 % to about 3.5 %. When the polarizing film 20 made of the polyolefin 21 has haze within the range, transmittance may be increased, and thus excellent optical properties may be secured.

The polyolefin 21 may have crystallinity of less than or equal to about 50 %, specifically about 30 % to about 50 %. When the polyolefin has crystallinity within the range, haze may be lowered and excellent optical properties may be obtained.

The polyolefin 21 may include polypropylene (PP), a polyethylene copolymer, a polypropylene copolymer, a polyethylene-polypropylene (PE-PP) copolymer, or a mixture thereof. The copolymer may further include another alphaolefin monomer unit in addition to polyethylene or polypropylene. In an embodiment, such additional alphaolefin monomer unit may be derived from monomers selected from 1-butene, 2-butene, 3-methylbutene, 1-pentene, 4-methylpentene, 1-hexene, 1-octene, 1-decene, 1-octadecene and mixtures thereof.

The polyolefin 21 may be a mixture of polypropylene and a polyethylene-polypropylene copolymer, and the polyethylene-polypropylene copolymer may include an ethylene group at about 1 to 50 wt%, for example about 1 wt% to about 25 wt%. When the polyethylene-polypropylene copolymer includes the polyethylene within the range, phase separation of the polypropylene and the polyethylene-polypropylene copolymer may be effectively prevented or suppressed. In addition, the polyethylene-polypropylene copolymer may increase an elongation rate during the process of elongation, and may have excellent light transmittance and orientation, thus improving polarization characteristics.

The polyolefin 21 may have a melt flow index of about 3 g/10 min to about 11 g/10 min, for example about 4 g/10 min to about 11 g/10 min, for another example about 5 g/10 min to about 11 g/10 min considering dye orientation and migration phenomena, and good workability of the polyolefin.

Herein, the melt flow index shows the amount of a polymer in a melt state flowing per 10 minutes, and relates to viscosity of the polymer in a melted state. In other words, as the melt flow index (MFI) is lower, the polymer has higher viscosity, while as the melt flow index (MFI) is higher, the polymer has lower viscosity. When the polyolefin 21 has a melt flow index within the range, properties of a final product as well as workability may be effectively improved.

The polypropylene may have a melt flow index ranging from about 3 g/10 min to about 10 g/10 min, and the polyethylene-polypropylene copolymer may have a melt flow index ranging from about 5 g/10 min to about 16 g/10 min. When the polypropylene and the polyethylene-polypropylene copolymer have a melt flow index (MFI) within the range, properties of a final product as well as workability may be effectively improved.

The polyolefin 21 may include the polypropylene and the polyethylene-polypropylene copolymer in a weight ratio of about 1:9 to about 9:1, for example about 7:3 to about 3:7, for another example about 4:6 to about 6:4, and for another example about 5:5. When the polypropylene and the polyethylene-polypropylene copolymer are included within the range, the polypropylene may be prevented from being crystallized and may have excellent mechanical strength, thus effectively improving the haze characteristics.

The polyolefin 21 is elongated in a uniaxial direction. The uniaxial direction may be same as the length direction of the dichroic dye 22.

The dichroic dye 22 is dispersed into the polyolefin 21, and is aligned in the elongation direction of the polyolefin 21. The dichroic dye 22 is a material that transmits one perpendicular polarization component of two perpendicular polarization components in a predetermined wavelength region.

The dichroic dye 22 may include, for example, a compound having a molecular backbone selected from an azo compound, an anthraquinone compound, a phthalocyanine compound, an azomethine compound, an indigoid or thioindigoid compound, a merocyanine compound, a 1,3-bis(dicyanomethylene)indan compound, an azulene compound, a quinophthalonic compound, a triphenodioxazine compound, an indolo[2,3,b]quinoxaline compound, an imidazo[1,2-b]-1,2,4 triazine compound, a tetrazine compound, a benzo compound, a naphtoquinone compound, or a combination thereof.

The azo compound may be, for example, a compound represented by Chemical Formula 1.

Chemical Formula 1

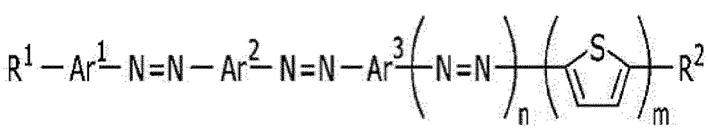

In Chemical Formula 1,

Ar$^1$ to Ar$^3$ are each independently a substituted or unsubstituted C6 to C15 arylene group,
R$^1$ is a substituted or unsubstituted C1 to C30 aliphatic organic group, a substituted or unsubstituted C6 to C30 aromatic organic group, a substituted or unsubstituted C1 to C30 hetero aliphatic organic group, a substituted or unsubstituted C3 to C30 hetero aromatic organic group, or a combination thereof,
R$^2$ is hydrogen, a substituted or unsubstituted C1 to C30 aliphatic organic group, a substituted or unsubstituted C6 to C30 aromatic organic group, a substituted or unsubstituted C1 to C30 hetero aliphatic organic group, a substituted or unsubstituted C3 to C30 hetero aromatic organic group, a substituted or unsubstituted amino group, or a combination thereof, and
n and m are independently 0 or 1.

In Chemical Formula 1, $Ar^1$ to $Ar^3$ may include, for example, a substituted or unsubstituted phenylene group, a substituted or unsubstituted naphthalene group, or a substituted or unsubstituted biphenylene group. Herein, the substituted phenylene group, the substituted naphthalene group, and the substituted biphenylene group may be, for example, substituted with a substituted or unsubstituted C1 to C20 alkyl group, a substituted or unsubstituted C1 to C20 alkoxy group, a halogen, a halogen-containing group, or a combination thereof.

In Chemical Formula 1,

$R^1$ is a substituted or unsubstituted C1 to C30 alkyl group, a substituted or unsubstituted C1 to C20 alkoxy group, a substituted or unsubstituted C1 to C20 thioalkyl group, $-C(=O)R^a$ ($R^a$ is a substituted or unsubstituted C1 to C30 alkyl group), $-OC(=O)R^b$ ($R^b$ is substituted or unsubstituted C1 to C30 alkyl group), a substituted or unsubstituted C2 to C20 alkenyl group, a substituted or unsubstituted C2 to C30 alkynyl group, or a combination thereof,

$R^2$ is hydrogen, a substituted or unsubstituted C1 to C30 alkyl group, a substituted or unsubstituted C6 to C20 aryl group, C1 to C20 alkoxy group, a substituted or unsubstituted C1 to C20 thioalkyl group, $-NR^3R^4$, or a combination thereof, wherein $R^3$ and $R^4$ are each independently hydrogen, a substituted or unsubstituted C1 to C10 alkyl group, or are linked to each other to provide a ring.

The dichroic dye 22 may have a decomposition temperature of greater than or equal to about 245 °C. Herein, the decomposition temperature indicates a temperature where the weight of the dichroic dye 22 decreases by about 5 % relative to its initial weight.

The dichroic dye 22 may be included in an amount of about 0.1 to about 10 parts by weight, for example about 0.5 to about 5 parts by weight, based on 100 parts by weight of the polyolefin 21. When the dichroic dye is included within the range, sufficient polarization characteristics may be obtained without deteriorating transmittance of a polarizing film.

The polarizing film 20 may have a dichroic ratio of greater than or equal to about 2 to about 14, for example about 3 to about 10, at a maximum absorption wavelength ($\lambda_{max}$) in a visible ray region. Herein, the dichroic ratio may be calculated by dividing plane polarization absorbance in a direction perpendicular to the axis of a polymer by polarization absorbance in a horizontal direction according to the following Equation 2.

Equation 2

$$DR = Log (1/T_{\perp}) / Log (1/T_{\parallel})$$

In Equation 2,

DR denotes a dichroic ratio of a polarizing film,
$T_{\parallel}$ is light transmittance of light entering parallel to the transmissive axis of a polarizing film, and
$T_{\perp}$ is light transmittance of light entering perpendicular to the transmissive axis of the polarizing film.

The dichroic ratio shows to what degree the dichroic dye 22 is arranged in the polarizing film 20 in one direction. When the polarizing film 20 has a dichroic ratio within the range in a visible ray wavelength region, the dichroic dye 22 is arranged according to arrangement of polymer chains, improving polarization characteristics of the polarizing film 20.

The polarizing film 20 may have haze ranging from less than or equal to about 5 %, for example about 0.5 % to about 4.5 %, for another example about 0.5 % to about 3.5 %. When the polyolefin 20 has haze within the range, transmittance may be increased, and thus excellent optical properties may be secured.

The polarizing film 20 may have polarization efficiency of greater than or equal to about 95 %, for example about 95 % to about 99.9 %. Herein, the polarization efficiency refers to polarization efficiency at light transmittance of about 42 %, and may be obtained by the following Equation 3.

Equation 3

$$PE (\%) = [(T_{\parallel} - T_{\perp})/(T_{\parallel} + T_{\perp})]^{1/2} \times 100$$

In Equation 3,

PE denotes polarization efficiency,
$T_{\parallel}$ is transmittance of light entering parallel to the transmissive axis of a polarizing film, and
$T_{\perp}$ is transmittance of light entering perpendicular to the transmissive axis of the polarizing film.

The polarizing film 20 is a high-temperature elongation film of the polyolefin 21 and the dichroic dye 22. The high-temperature elongation film may be obtained by melt-blending a composition for a polarizing film including a polyolefin and a dichroic dye at greater than or equal to a melting point ($T_m$) of the polyolefin 21, extruding it to form a sheet, and then high temperature-elongating the sheet at less than or equal to the melting point of the polyolefin. The polyolefin 21 may have a melting point ($T_m$) of about 125 °C to about 170 °C.

The composition for a polarizing film may include the polyolefin 21 and the dichroic dye 22, and the polyolefin 21 and the dichroic dye 22 may be respectively in a form of a solid. The composition for a polarizing film may have, for example, a solid content of greater than or equal to about 90 wt%, and in an embodiment, comprises no solvent.

The polarizing film 20 may be manufactured by melt-blending the composition for a polarizing film and elongating the same.

More specifically, the polarizing film 20 is for example manufactured through a step of melt-blending the composition for a polarizing film including a polyolefin and a dichroic dye, putting the melt mixture in a single-screw extruder, mixing it at a predetermined process temperature and at a predetermined screw speed, discharging it in a T-die connected to the extruder after a predetermined time, and passing it through a chill roll to form a sheet, and another step of elongating the sheet in a uniaxial direction at a high temperature.

The melt-blending of the composition for a polarization film may be performed at a temperature of less than or equal to about 300 °C, and specifically, ranging from about 150 °C to about 300 °C.

The elongation in a uniaxial direction may be performed at a temperature ranging from about 30 °C to about 200 °C at an elongation rate ranging from about 400 % to about 1,400 %. The elongation rate refers to a length ratio of after the elongation to before the elongation of the sheet, and means the elongation extent of the sheet after uniaxial elongation.

The polarizing film 20 may have a relative thin thickness of less than or equal to about 100 micrometres (μm), for example about 18 μm to about 50 μm. When the polarizing film 20 has a thickness within the range, it may be significantly thinner than a polarizing plate requiring a protective layer such as triacetyl cellulose (TAC), and may contribute to realizing a thin display device.

Hereinafter, an anti-reflective film according to an embodiment is described referring to drawings.

FIG. 2 is a cross-sectional view showing an anti-reflective film according to an embodiment.

Referring to FIG. 2, an anti-reflective film according to an embodiment includes a phase retardation film 60 and the polarizing film 20.

The phase retardation film 60 may be a phase difference film, for example, a waveplate including a λ/4 plate. The phase retardation film 60 may circularly polarize light passing through the polarizing film 20 and thereby cause retardation of the light such that absorption and/or reflection of the light at the phase retardation film 60 is changed.

The polarizing film 20 is as described above.

FIG. 3 is a schematic diagram showing the anti-reflection principle of an anti-reflective film.

Referring to FIG. 3, when incident unpolarized light passes through the polarizing film 20, one polarizing perpendicular component of two polarizing perpendicular components, e.g., a first polarizing component, is transmitted through the polarizing film 20, and changed into polarized light, and the polarized light passes through the phase retardation film 60 such as a λ/4 plate and may be changed into circularly polarized light. The circularly polarized light is reflected in the display panel 50 including a substrate, an electrode, and the like, and the direction of the circularly polarized light is changed. When the circularly polarized light, the direction of which is changed, passes through the phase retardation film 60 again, the phase retardation film 60 transmits the other polarizing perpendicular component of the two polarizing perpendicular components, e.g., a second polarizing component, which is perpendicular to the first polarizing component. The second polarizing component may not pass through the polarizing film 20 and is not transmitted out of the display device, thus effectively preventing the reflection of external light.

The polarizing film 20 and the anti-reflective film 65 may be applied to various display devices.

The display device may be a liquid crystal display (LCD).

FIG. 4 is a cross-sectional view showing a liquid crystal display (LCD) according to an embodiment.

Referring to FIG. 4, the LCD according to some embodiments includes a liquid crystal display panel 10 and a polarizing film 20 disposed on both the lower part and the upper part of the liquid crystal display panel 10.

The liquid crystal panel 10 may be a twist nematic (TN) mode panel, a patterned vertical alignment (PVA) mode panel, an in-plane switching (IPS) mode panel, an optically compensated bend (OCB) mode panel, and the like.

The liquid crystal display panel 10 includes a first display panel 100, a second display panel 200, and a liquid crystal layer 300 interposed between the first display panel 100 and the second display panel 200.

The first display panel 100 may include, for example, a thin film transistor (not shown) formed on a substrate (not shown) and a first field generating electrode (not shown) connected thereto. The second display panel 200 may include, for example, a color filter (not shown) formed on the substrate and a second field generating electrode (not shown). However, it is not limited thereto, and the color filter may be included in the first display panel 100, while both the first electric field generating electrode and the second electric field generating electrode may be disposed in the first

display panel 100.

The liquid crystal layer 300 may include a plurality of liquid crystal molecules. The liquid crystal molecules may have positive or negative dielectric anisotropy. When the liquid crystal molecules have positive dielectric anisotropy, the long axes thereof may be aligned substantially parallel to the surface of the first display panel 100 and the second display panel 200 when an electric field is not applied, and may be aligned substantially perpendicular to the surface of the first display panel 100 and the second display panel 200 when an electric field is applied. On the contrary, when the liquid crystal molecules have negative dielectric anisotropy, the long axes thereof may be aligned substantially perpendicular to the surface of the first display panel 100 and the second display panel 200 when an electric field is not applied, and may be aligned substantially parallel to the surface of the first display panel 100 and the second display panel 200 when an electric field is applied.

The polarizing film 20 is disposed on the outside of the liquid crystal display panel 10. Although it is shown to be disposed on the upper part and lower part of the liquid crystal display panel 10 in the drawing, it may be formed on either the upper part or the lower part of the liquid crystal display panel 10.

The polarizing film 20 includes a polyolefin and a dichroic dye that are the same as described above.

The display device may be an organic light emitting diode (OLED) display.

FIG. 5 is a cross-sectional view showing an organic light emitting diode (OLED) display according to an embodiment.

Referring to FIG. 5, an organic light emitting diode (OLED) display according to an embodiment includes a base substrate 410, a lower electrode 420, an organic emission layer 430, an upper electrode 440, an encapsulation substrate 450, and an anti-reflective film 65.

The base substrate 410 may be formed of glass or plastic.

Either of the lower electrode 420 or the upper electrode 440 may be an anode, while the other is a cathode. The anode is an electrode where holes are injected. It is formed of a transparent conductive material having a high work function and externally transmitting entered light, for example, indium-doped tin oxide (ITO) or indium-doped zinc oxide (IZO). The cathode is an electrode where electrons are injected. It is formed of a conducting material having a low work function and having no influence on an organic material, selected from, for example, aluminum (Al), calcium (Ca), and barium (Ba).

The organic emission layer 430 includes an organic material emitting light when a voltage is applied between the lower electrode 420 and the upper electrode 440.

An auxiliary layer (not shown) may be further included between the lower electrode 420 and the organic emission layer 430 and between the upper electrode 440 and the organic emission layer 430. The auxiliary layer may include a hole transport layer, a hole injection layer, an electron injection layer, and an electron transport layer for balancing electrons and holes.

The encapsulation substrate 450 may be made of glass, metal, or a polymer. The lower electrode 420, the organic emission layer 430, and the upper electrode 440 are sealed to prevent moisture and/or oxygen from flowing in.

The anti-reflective film 65 may include a phase retardation film 60 and a polarizing film 20, as described above.

The phase retardation film 60 may circularly polarize light passing through the polarizing film 20 and generate a phase difference, and thus have an influence on reflection and absorption of the light. The phase retardation film 460 may be omitted depending on a particular embodiment.

The anti-reflective film 65 may be disposed at a light-emitting side. For example, the anti-reflective film 65 may be disposed outside of the base substrate 410 in a bottom emission type in which light emits from the base substrate 410, and outside of the encapsulation substrate 450 in a top emission type in which light emits from the encapsulation substrate 450.

The polarizing film 20 may play a role of a light absorption layer absorbing external light and thus prevent display characteristic deterioration due to reflection of the external light.

Hereinafter, the present disclosure is illustrated in more detail with reference to examples. However, these examples are exemplary, and the present disclosure is not limited thereto.

Evaluation 1: Melt Flow Index

The melt flow index of a commercially-available polyolefin is measured at 190 °C under a load (kgf) of 2.16 kg.

Evaluation 2: Zero Shear Viscosity and Complex Viscosity

The commercially-available polyolefin is press-molded to obtain a 1.0 mm-thick sample by being preheated at 230 °C for 3 minutes, heated at 230 °C for 2 minutes under a pressure of 100 $kgf/cm^2$, and then cooled down to 20 °C for 5 minutes under a pressure of 100 $kgf/cm^2$.

The sample is mounted between upper and lower measuring plates of Physica MCR 501 (Anton Paar Corp.

Germany) equipment. In order to obtain the zero shear viscosity of the sample, the frequency sweep of the sample is measured at 210 °C in an angular frequency (ω, rad/s) range of $0.1 \leq \omega \leq 300$. Herein, a parallel plate having a diameter, φ of 8 mm is used, the sample is formed to have a thickness of about 1.0 mm, and a strain is set to be about 1 %. The zero shear viscosity is obtained by using a cross model of the following Equation 4 through an analysis program installed in a rheometer, and the results are provided in FIG. 6. FIG. 6 shows the complex viscosity profiles of the samples No. 1 to 8.

Equation 4

$$\eta^*(\omega) = \frac{\eta_0^* - \eta_\infty^*}{1 + (K\omega)^m} + \eta_\infty^*$$

In Equation 4,

$\eta_0$ is viscosity at angular frequency of 0, $\eta_\infty$ is viscosity at infinite angular frequency, K is a time constant related to the relaxation, and m is a dimensionless exponent.

Evaluation 3: Yield Stress

The yield stress is obtained by measuring the amplitude sweep of a sample made in the same method as Evaluation 2 with Physica MCR 501 equipment (manufactured by Anton Paar Corp,. Germany) at 210 °C (±3 °C) in a range of 10≤ stress (T) ≤100,000. Herein, a parallel plate having a diameter, φ of 8 mm is used, the sample has a thickness of about 1.0 mm, and an angular frequency is set to1 rad/s.

The results are provided in the following Table 1.

Table 1

| Sample No. | Polyolefin | Manufacture | MFI (g/ 10 min) | Zero shear viscosity (Pa · s) | Yield stress (Pa) |
|---|---|---|---|---|---|
| 1 | HF351 (PP) | Samsung Total Petrochemicals Co., Ltd. | 3 | 17,343 | 8680.99 |
| 2 | HU300/RP505 0 (PP/PE-PP) (mixed in a weight ratio of 6/4) | Samsung Total Petrochemicals Co., Ltd./ Polymirae Co., Ltd. | 5 | 11,132 | 4097.93 |
| 3 | HU300/RJ581 (PP/PE-PP) (mixed in a weight ratio of 6/4) | Samsung Total Petrochemicals Co., Ltd. | 7.8 | 8271.6 | 3157.11 |
| 4 | RP5050 (PE-PP) | Polymirae Co., Ltd. | 8 | 3224.5 | 4090.22 |
| 5 | HM2089 (PP) | Polymirae Co., Ltd. | 9 | 4400.5 | 3472.35 |
| 6 | HP521M /RJ581 (PP/PP) (mixed in a 6/4 weight ratio) | Polymirae Co., Ltd./ Samsung Total Petrochemicals Co., Ltd. | 10.8 | 2607 | 2691.1 |
| 7 | HU300 (PP) | Samsung Total Petrochemicals Co., Ltd. | 3 | 20967 | 7436.65 |
| 8 | RJ581 (PE-PP) | Samsung Total Petrochemicals Co., Ltd. | 15 | 1514.2 | 1456.95 |

In Table 1, PP denotes polypropylene and PE-PP denotes ethylenepropylene copolymer.

Referring to the results of Table 1, the samples No. 1 to 7 show a melt flow index of 3 to 11, while the sample No. 8 shows a melt flow index out of the range. As for the zero shear viscosity, the samples No. 1 to 6 show zero shear viscosity ranging from about 2600 Pa · s to about 17400 Pa · s, and the samples No. 7 and 8 show zero shear viscosity out of the range. As for the yield stress, the samples No. 1 to 7 show yield stress ranging from about 2600 Pa to about 8700 Pa, and the sample No. 8 shows yield stress out of the range.

Referring to the complex viscosity results in FIG. 6, the samples No. 1 to 6 have complex viscosity values which fall between the two viscosity profiles marked with a solid line. In other words, the complex viscosity of the samples No.

1 to 6 satisfies the following Equation 1.

Equation 1

$$\frac{2600}{1+(k_1\omega)^{m_1}} \leq \eta^* \leq \frac{17400}{1+(k_2\omega)^{m_2}}$$

In Equation 1,

$\omega$ is an angular frequency of a rotational rheometer, $k_1$ is a constant of about 0.108 to about 0.132, $k_2$ is a constant of about 0.738 to about 0.902, $m_1$ ranges from about 0.477 to about 0.583, and $m_2$ ranges from about 0.522 to about 0.638.

On the contrary, the samples No. 7 and 8 show complex viscosity values outside of the area defined by the two viscosity profiles marked with a solid line.

Manufacture of Polarizing Film

Examples 1 to 6 and Comparative Examples 1 and 2

100 parts by weight of each mixture of the polyolefin samples No. 1 to 8 and 1 part by weight of dichroic dyes represented by the following Chemical Formulae 1A to 1D are mixed to prepare compositions for a polarizing film. The compositions for a polarizing film respectively using the samples No. 7 and 8 are Comparative Examples 1 and 2, while the compositions for a polarizing film respectively using the samples No. 1 to 6 are Examples 1 to 6.

Each dichroic dye is used as follows: 0.200 parts by weight of a dichroic dye represented by the following Chemical Formula 1A (yellow, $\lambda_{max}$ = 385 nanometers (nm), dichroic ratio = 7.0), 0.228 parts by weight of a dichroic dye represented by the following Chemical Formula 1B (yellow, $\lambda_{max}$ = 455 nm, dichroic ratio = 6.5), 0.286 parts by weight of a dichroic dye represented by the following Chemical Formula 1C (red, $\lambda_{max}$ = 555 nm, dichroic ratio = 5.1), and 0.286 parts by weight of a dichroic dye represented by the following Chemical Formula 1D (blue, $\lambda_{max}$ = 600 nm, dichroic ratio = 4.5).

Chemical Formula 1A

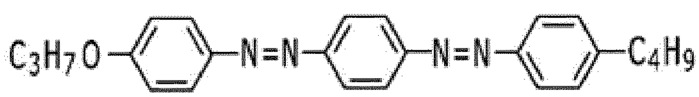

Chemical Formula 1B

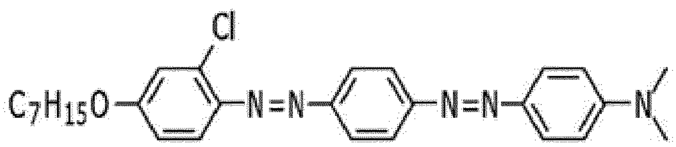

Chemical Formula 1C

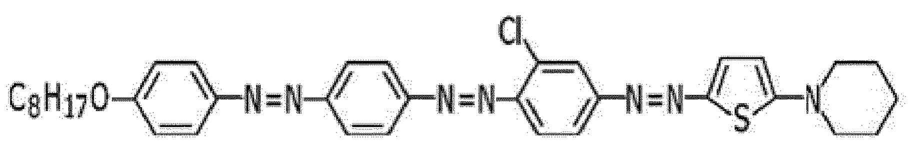

Chemical Formula 1D

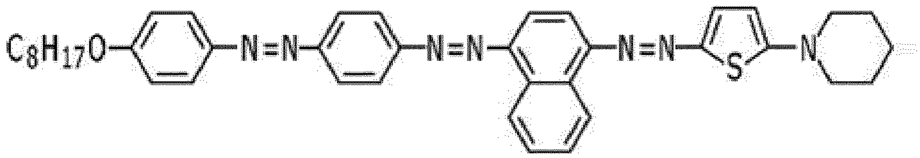

The composition for a polarizing film is melt-mixed at about 230 °C by using a single-screw extruder (Collin, Germany). Subsequently, the melt-mixed mixture is discharged in a T-die connected to the front end of the extruder and passed through a chill roll, forming a sheet. The sheet (thickness: about 170 to 195 μm) is 1100 % elongated in a uniaxial direction using a tensile tester made by Instron at 115 °C, forming polarizing films.

Evaluation 4: Light Transmittance and Polarization Efficiency

Light transmittance (Ts) and polarization efficiency (PE) of the polarizing films according to Examples 1 to 6 and Comparative Examples 1 and 2 in a visible ray region are evaluated.

The light transmittance is obtained by respectively measuring light transmittance of a polarizing film regarding light parallel to a transmittance axis of the polarizing film and light transmittance of the polarizing film regarding light perpendicular to the transmittance axis of the polarizing film with a UV-VIS spectrophotometer (V-7100, JASCO).

The polarization efficiency is obtained using the measured light transmittance.

[Equation 3]

$$PE\ (\%) = [(T_{\parallel} - T_{\perp})/(T_{\parallel} + T_{\perp})]^{1/2} \times 100$$

In Equation 3,

PE denotes polarization efficiency,

$T_{\parallel}$ is transmittance of light entering parallel to the transmissive axis of a polarizing film, and

$T_{\perp}$ is transmittance of light entering perpendicular to the transmissive axis of the polarizing film.

The polarization efficiency measured at light transmittance of 41.9 % and haze are provided in the following Table 2.

The haze of the polarizing films of Examples 1 to 6 and Comparative Examples 1 and 2 is measured by using a hazemeter, NDH7000SP (Nippon Denshoku, Japan).

Table 2

| | Polarization efficiency (PE, %) (@ transmittance: 41.9 %) | Haze (%) |
|---|---|---|
| Example 1 | 98.70 | 3.2 |
| Example 2 | 98.74 | 4.3 |
| Example 3 | 98.57 | 0.95 |
| Example 4 | 98.60 | 3.33 |
| Example 5 | 98.53 | 2.37 |
| Example 6 | 98.67 | 0.84 |
| Comparative Example 1 | 98.33 | 5.54 |
| Comparative Example 2 | 97.31 | 0.60 |

Referring to Table 2, the polarizing films according to Examples 1 to 6 all showed high polarization efficiency of greater than or equal to 98 % at light transmittance of 41.9 % and sufficiently low haze compared with the ones according to Comparative Examples 1 and 2. On the other hand, the polarizing film according to Comparative Example 2 showed low polarization efficiency.

## Claims

1. A composition for forming a polarizing film comprising:

   a polyolefin and a dichroic dye,
   wherein the polyolefin has zero shear viscosity ($\eta_0$) ranging from 2600 Pa · s to 17400 Pa · s, preferably from 2600 Pa · s to 8500 Pa · s, at a temperature of about 210 °C (±3 °C); and
   the dichroic dye includes a yellow dichroic dye represented by the following Chemical Formula 1A, a yellow dichroic dye represented by the following Chemical Formula 1B, a red dichroic dye represented by the following Chemical Formula 1C and a blue dichroic dye represented by the following Chemical Formula 1D:

   Chemical Formula 1A

   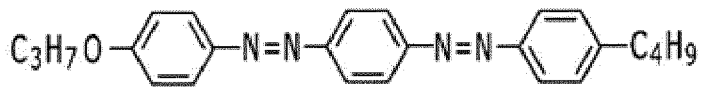

   Chemical Formula 1B

   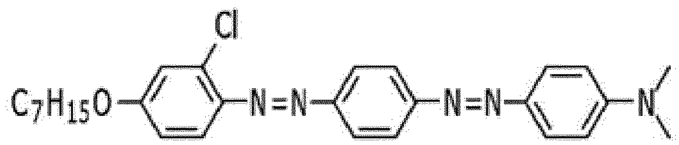

   Chemical Formula 1C

   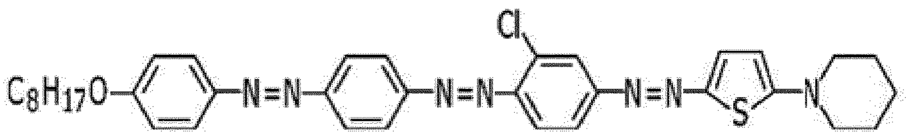

   Chemical Formula 1D

   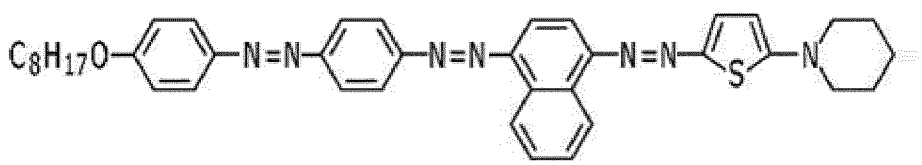

   .

2. The composition of claim 1, wherein the polyolefin has complex viscosity ($\eta^*$) satisfying the following Equation 1:

Equation 1

$$\frac{2600}{1+(k_1\omega)^{m_1}} \leq \eta* \leq \frac{17400}{1+(k_2\omega)^{m_2}}$$

wherein, in Equation 1,

$\omega$ is an angular frequency of a rotational rheometer, $k_1$ is a constant of 0.108 to 0.132, $k_2$ is a constant of 0.738 to 0.902, $m_1$ ranges from 0.477 to 0.583, and $m_2$ ranges from 0.522 to 0.638.

3. The composition of claim 2, wherein the polyolefin has complex viscosity ($\eta$*) satisfying the following Equation 1-1:

Equation 1-1

$$\frac{2600}{1+(k_1\omega)^{m_1}} \leq \eta* \leq \frac{12000}{1+(k_2\omega)^{m_2}}$$

wherein in Equation 1-1,

$\omega$ is an angular frequency of a rotational rheometer, $k_1$ is a constant of 0.108 to 0.132, $k_2$ is a constant of 1.071 to 1.309, $m_1$ ranges from 0.477 to 0.583, and $m_2$ ranges from 0.468 to 0.572, or

wherein the polyolefin has complex viscosity ($\eta$*) satisfying the following Equation 1-2:

[Equation 1-2]

$$\frac{2600}{1+(k_1\omega)^{m_1}} \leq \eta* \leq \frac{8500}{1+(k_2\omega)^{m_2}}$$

wherein, in Equation 1-2,

$\omega$ is an angular frequency of a rotational rheometer, $k_1$ is a constant of 0.108 to 0.132, $k_2$ is a constant of 0.603 to 0.737, $m_1$ ranges from 0.477 to 0.583, and $m_2$ ranges from 0.54 to 0.66.

4. The composition of any of claims 1-3, wherein the polyolefin has yield stress ranging from 2600 Pa to 8700 Pa.

5. The composition of any of claims 1-4, wherein the polyolefin comprises polypropylene, a polyethylene copolymer, a polypropylene copolymer, a polyethylene-polypropylene copolymer, or a combination thereof.

6. The composition of claim 5, wherein the polyolefin is a mixture of polypropylene (PP) and a polyethylene-polypropylene (PE-PP) copolymer, wherein the polyethylene and polypropylene (PE-PP) copolymer comprises ethylene in an amount of 1 to 50 wt% based on the weight of the copolymer, optionally wherein the polypropylene (PP) has a melt flow index (MFI) ranging from 3 g/10 min to 10 g/10 min, and the polyethylene-polypropylene copolymer (PE-PP) has a melt flow index (MFI) ranging from 5 g/10 min to 16 g/10 min.

7. The composition of claim 6, comprising the polypropylene and the polyethylene-polypropylene copolymer in a weight ratio of 1:9 to 9:1.

8. The composition of any of claims 1-5, wherein the polyolefin has a melt flow index (MFI) ranging from 3 g/10 min to 11 g/10 min.

**9.** The composition of any of claims 1-8, which has a solid content of greater than or equal to 90 wt%.

**10.** The composition of any of claims 1-9, wherein the composition is solvent-free.

**11.** A polarizing film formed from the composition of any of claims 1-10.

**12.** The polarizing film of claim 11, wherein the dichroic dye is dispersed into the polyolefin, and the polyolefin is elongated in a uniaxial direction 400% to 1300 % and/or wherein the dichroic dye is present in an amount of 0.1 to 10 parts by weight based on 100 parts by weight of the polyolefin, preferably wherein the dichroic dye is present in an amount of 0.5 to 5 parts by weight based on 100 parts by weight of the polyolefin.

**13.** The polarizing film of claim 11 or 12, which:

has haze of less than or equal to 5 %, preferably has haze ranging from 0.5 % to 3.5 %; and/or
has a dichroic ratio ranging from 2 to 14 in a visible ray wavelength region ranging from 380 nm to 780 nm; and/or
has polarization efficiency of greater than or equal to 95 %, preferably wherein the polarization film has polarization efficiency of 95 % to 99.9 %.

**14.** An anti-reflective film comprising:

the polarizing film of any of claims 11-13, and
a phase retardation film.

**15.** A display device comprising the polarizing film according to any of claims 11-13 or the anti-reflective film according to claim 14.

## Patentansprüche

**1.** Zusammensetzung zum Bilden eines polarisierenden Films, umfassend:

ein Polyolefin und einen dichroitischen Farbstoff,

wobei das Polyolefin Nullscherviskosität ($\eta_0$) aufweist, die von 2600 Pa • s bis 17400 Pa • s reicht, vorzugsweise von 2600 Pa • s bis 8500 Pa • s, bei einer Temperatur von ungefähr 210 °C (±3 °C); und
der dichroitische Farbstoff einen gelben dichroitischen Farbstoff dargestellt durch die folgende chemische Formel 1A, einen gelben dichroitischen Farbstoff dargestellt durch die folgende chemische Formel 1B, einen roten dichroitischen Farbstoff dargestellt durch die folgende chemische Formel 1C und einen blauen dichroitischen Farbstoff dargestellt durch die folgende chemische Formel 1D beinhaltet:

Chemische Formel 1A

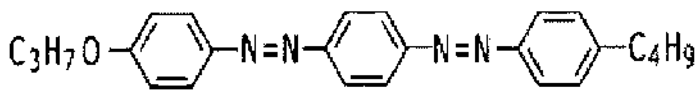

Chemische Formel 1B

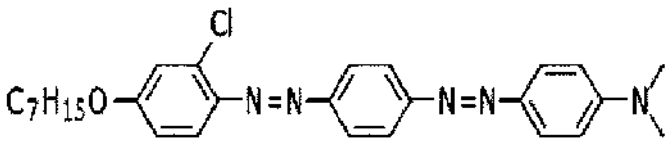

Chemische Formel 1C

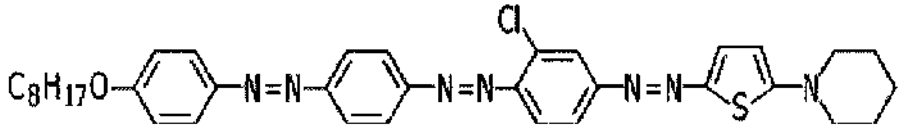

Chemische Formel 1D

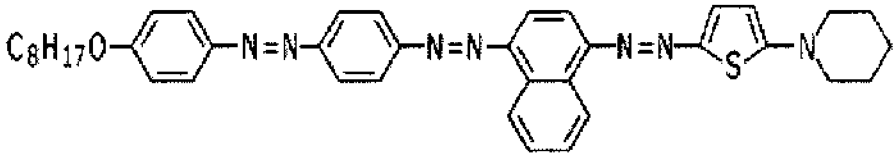

.

2. Zusammensetzung nach Anspruch 1, wobei das Polyolefin komplexe Viskosität (η*) aufweist, welche die folgende Gleichung 1 erfüllt:

Gleichung 1

$$\frac{2600}{1+(k_1\omega)^{m_1}} \leq \eta * \leq \frac{17400}{1+(k_2\omega)^{m_2}}$$

wobei in Gleichung 1

ω eine Winkelfrequenz eines Rotationsrheometers ist, $k_1$ eine Konstante von 0,108 bis 0,132 ist, $k_2$ eine Konstante von 0,738 bis 0,902 ist, $m_1$ von 0,477 bis 0,583 reicht und $m_2$ von

3. Zusammensetzung nach Anspruch 2, wobei das Polyolefin komplexe Viskosität (η*) aufweist, welche die folgende Gleichung 1-1 erfüllt:

Gleichung 1-1

$$\frac{2600}{1+(k_1\omega)^{m_1}} \leq \eta * \leq \frac{12000}{1+(k_2\omega)^{m_2}}$$

wobei in Gleichung 1-1

ω eine Winkelfrequenz eines Rotationsrheometers ist, $k_1$ eine Konstante von 0,108 bis 0,132 ist, $k_2$ eine Konstante von 1,071 bis 1,309 ist, $m_1$ von 0,477 bis 0,583 reicht und $m_2$ von 0,468 bis 0,572 reicht, oder

wobei das Polyolefin komplexe Viskosität (η*) aufweist, welche die folgende Gleichung 1-2 erfüllt:

[Gleichung 1-2]

$$\frac{2600}{1+(k_1\omega)^{m_1}} \leq \eta * \leq \frac{8500}{1+(k_2\omega)^{m_2}}$$

wobei in Gleichung 1-2

ω eine Winkelfrequenz eines Rotationsrheometers ist, $k_1$ eine Konstante von 0,108 bis 0,132 ist, $k_2$ eine Konstante von 0,603 bis 0,737 ist, $m_1$ von 0,477 bis 0,583 reicht und $m_2$ von 0,54 bis 0,66 reicht.

4. Zusammensetzung nach einem der Ansprüche 1-3, wobei das Polyolefin Fließspannung aufweist, die von 2600 Pa bis 8700 Pa reicht.

5. Zusammensetzung nach einem der Ansprüche 1-4, wobei das Polyolefin Polypropylen, ein Polyethylen-Copolymer, ein Polypropylen-Copolymer, ein Polyethylen-Polypropylen-Copolymer oder eine Kombination davon umfasst.

6. Zusammensetzung nach Anspruch 5, wobei das Polyolefin ein Gemisch aus Polypropylen (PP) und einem Polyethylen-Polypropylen-(PE-PP)-Copolymer ist, wobei das Polyethylen- und Polypropylen-(PE-PP)-Copolymer Ethylen in einer Menge von 1 bis 50 Gew.-% basierend auf dem Gewicht des Copolymers umfasst, wobei optional das Polypropylen (PP) einen Schmelzflussindex (MFI) aufweist, der von 3 g/10 Min. bis 10 g/10 Min. reicht, und das Polyethylen-Polypropylen-Copolymer (PE-PP) einen Schmelzflussindex (MFI) aufweist, der von 5 g/10 Min. bis 16 g/10 Min. reicht.

7. Zusammensetzung nach Anspruch 6, umfassend das Polypropylen und das Polyethylen-Polypropylen-Copolymer in einem Gewichtsverhältnis von 1:9 bis 9:1.

8. Zusammensetzung nach einem der Ansprüche 1-5, wobei das Polyolefin einen Schmelzflussindex (MFI) aufweist, der von 3 g/10 Min. bis 11 g/10 Min. reicht.

9. Zusammensetzung nach einem der Ansprüche 1-8, die einen Feststoffanteil von mehr als oder gleich 90 Gew.-% aufweist.

10. Zusammensetzung nach einem der Ansprüche 1-9, wobei die Zusammensetzung lösungsmittelfrei ist.

11. Polarisierender Film, gebildet aus der Zusammensetzung nach einem der Ansprüche 1-10.

12. Polarisierender Film nach Anspruch 11, wobei der dichroitische Farbstoff in dem Polyolefin verteilt wird und das Polyolefin in eine uniaxiale Richtung um 400 % bis 1300 % verlängert wird und/oder wobei der dichroitische Farbstoff in einer Menge von 0,1 bis 10 Teilen nach Gewicht basierend auf 100 Teilen nach Gewicht des Polyolefins vorhanden ist, wobei der dichroitische Farbstoff vorzugsweise in einer Menge von 0,5 bis 5 Teilen nach Gewicht basierend auf 100 Teilen nach Gewicht des Polyolefins vorhanden ist.

13. Polarisierender Film nach Anspruch 11 oder 12, der:

Trübung von weniger als oder gleich 5 % aufweist, vorzugsweise Trübung in der Spanne von 0,5 % bis 3,5 % aufweist; und/oder
ein dichroitisches Verhältnis aufweist, das von 2 bis 14 in einem sichtbaren Strahlenwellenlängenbereich reicht, der von 380 nm bis 780 nm reicht; und/oder
Polarisationseffizienz von mehr als oder gleich 95 % aufweist, wobei der Polarisationsfilm vorzugsweise Polarisationseffizienz von 95 % bis 99,9 % aufweist.

14. Anti-Reflex-Film, umfassend:

den polarisierenden Film nach einem der Ansprüche 11-13, und
einen Phasenverzögerungsfilm.

15. Anzeigevorrichtung, umfassend den polarisierenden Film nach einem der Ansprüche 11-13 oder den Anti-Reflex-Film nach Anspruch 14.

**Revendications**

1. Composition permettant de former un film polarisant comprenant :

une polyoléfine et un colorant dichroïque,
ladite polyoléfine ayant une viscosité à cisaillement nul ($\eta_0$) allant de 2600 Pa • s à 17400 Pa • s, de préférence de 2600 Pa • s à 8500 Pa • s, à une température d'environ 210°C (±3 °C) ; et
ledit colorant dichroïque comprenant un colorant dichroïque jaune représenté par la formule chimique 1A suivante, un colorant dichroïque jaune représenté par la formule chimique 1B suivante, un colorant dichroïque rouge représenté par la formule chimique 1C suivante et un colorant dichroïque bleu représenté par la formule chimique 1D suivante :

Formule chimique 1A

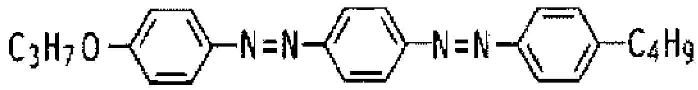

Formule chimique 1B

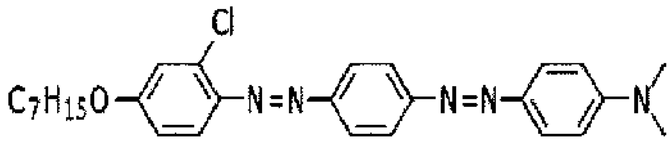

Formule chimique 1C

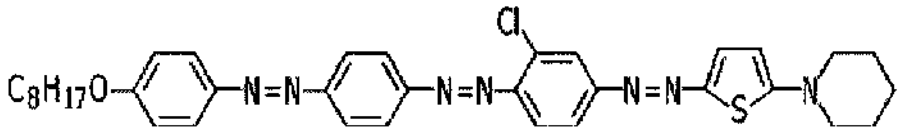

Formule chimique 1D

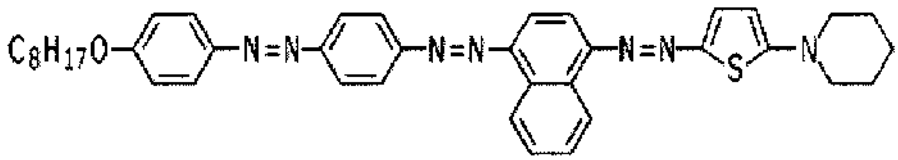

**2.** Composition selon la revendication 1, ladite polyoléfine ayant une viscosité complexe (η*) satisfaisant l'équation 1 suivante :

Equation 1

$$\frac{2600}{1+(k_1\omega)^{m_1}} \leq \eta^* \leq \frac{17400}{1+(k_2\omega)^{m_2}}$$

dans laquelle, dans l'équation 1,

ω représente une fréquence angulaire d'un rhéomètre rotatif, $k_1$ représente une constante valant 0,108 à 0,132, $k_2$ représente une constante valant 0,738 à 0,902, $m_1$ va de 0,477 à 0,583, et $m_2$ va de 0,522 à 0,638.

**3.** Composition selon la revendication 2, ladite polyoléfine ayant une viscosité complexe (η*) satisfaisant l'équation 1-1 suivante :

Equation 1-1

$$\frac{2600}{1+(k_1\omega)^{m_1}} \leq \eta^* \leq \frac{12000}{1+(k_2\omega)^{m_2}}$$

dans laquelle, dans l'équation 1-1,

$\omega$ représente une fréquence angulaire d'un rhéomètre rotatif, $k_1$ représente une constant valant 0,108 à 0,132, $k_2$ représente une constante valant 1,071 à 1,309, $m_1$ va de 0,477 à 0,583, et $m_2$ va de 0,468 à 0,572, ou

ladite polyoléfine ayant une viscosité complexe ($\eta$*) satisfaisant l'équation 1-2 suivante :

[Equation 1-2]

$$\frac{2600}{1+(k_1\omega)^{m_1}} \leq \eta^* \leq \frac{8500}{1+(k_2\omega)^{m_2}}$$

dans laquelle, dans l'équation 1-2,

$\omega$ représente une fréquence angulaire d'un rhéomètre rotatif, $k_1$ représente une constant valant 0,108 à 0,132, $k_2$ représente une constante valant 0,603 à 0,737, $m_1$ va de 0,477 à 0,583, et $m_2$ va de 0,54 à 0,66.

**4.** Composition selon l'une quelconque des revendications 1 à 3, ladite polyoléfine présentant une contrainte d'écoulement allant de 2600 Pa à 8700 Pa.

**5.** Composition selon l'une quelconque des revendications 1 à 4, ladite polyoléfine comprenant du polypropylène, un copolymère de polyéthylène, un copolymère de polypropylène, un copolymère polyéthylène-polypropylène, ou une combinaison de ceux-ci.

**6.** Composition selon la revendication 5, ladite polyoléfine étant un mélange de polypropylène (PP) et d'un copolymère polyéthylène-polypropylène (PE-PP), ledit copolymère de polyéthylène et de polypropylène (PE-PP) comprenant de l'éthylène en une quantité de 1 à 50 % en poids par rapport au poids du copolymère, éventuellement ledit polypropylène (PP) ayant un indice de fluidité à chaud (IFC) allant de 3 g/10 min à 10 g/10 min, et ledit copolymère polyéthylène-polypropylène (PE-PP) ayant un indice de fluidité à chaud (IFC) allant de 5 g/10 min à 16 g/10 min.

**7.** Composition selon la revendication 6, comprenant le polypropylène et le copolymère polyéthylène-polypropylène en un rapport massique de 1:9 à 9:1.

**8.** Composition selon l'une quelconque des revendications 1 à 5, ladite polyoléfine ayant un indice de fluidité à chaud (IFC) de 3 g/10 min à 11 g/10 min.

**9.** Composition selon l'une quelconque des revendications 1 à 8, qui présente une teneur en matière sèche supérieure ou égale à 90 % en poids.

**10.** Composition selon l'une quelconque des revendications 1 à 9, ladite composition étant exempte de solvant.

**11.** Film polarisant formé à partir de la composition selon l'une quelconque des revendications 1 à 10.

**12.** Film polarisant selon la revendication 11, ledit colorant dichroïque étant dispersé dans la polyoléfine, et ladite polyoléfine étant étirée suivant une direction uniaxiale de 400 % à 1300 % et/ou ledit colorant dichroïque étant présent en une quantité de 0,1 à 10 parties en poids par rapport à 100 parties en poids de la polyoléfine, de préférence ledit colorant dichroïque étant présent en une quantité de 0,5 à 5 parties en poids par rapport à 100 parties en poids de la polyoléfine.

**13.** Film polarisant selon la revendication 11 ou 12, qui :

a un trouble inférieur ou égal à 5 %, de préférence a un trouble allant de 0,5 % à 3,5 % ; et/ou
présente un rapport dichroïque de 2 à 14 dans une région de longueurs d'ondes de rayons visibles allant de 380 nm à 780 nm ; et/ou
présente une efficacité de polarisation supérieure ou égale à 95 %, de préférence ledit film polarisant présentant une efficacité de polarisation de 95 % à 99,9 %.

**14.** Film anti-réfléchissant comprenant :

le film polarisant selon l'une quelconque des revendications 11 à 13 et
un film de retard de phase.

**15.** Dispositif d'affichage comprenant le film de polarisation selon l'une quelconque des revendications 11 à 13 ou le film anti-réfléchissant selon la revendication 14.

FIG. 1

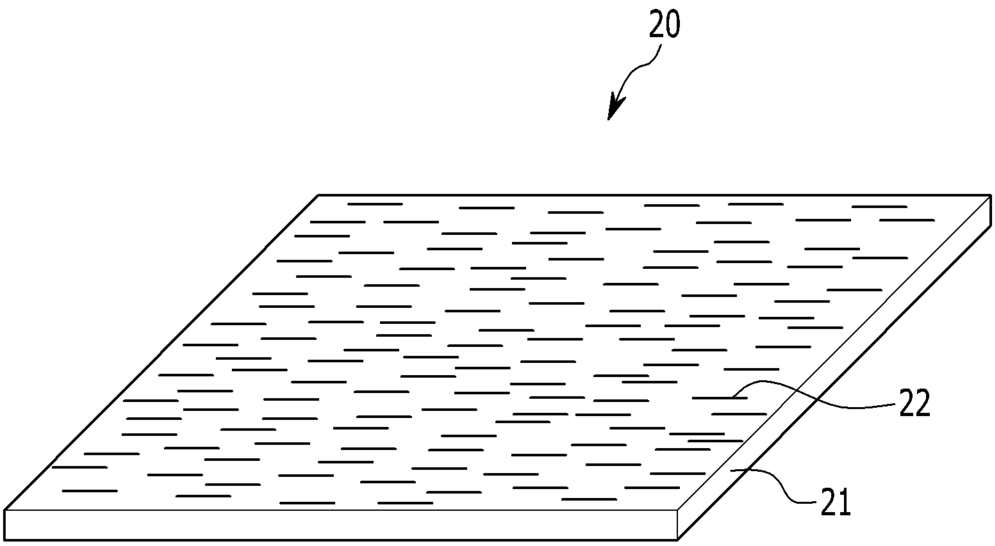

FIG. 2

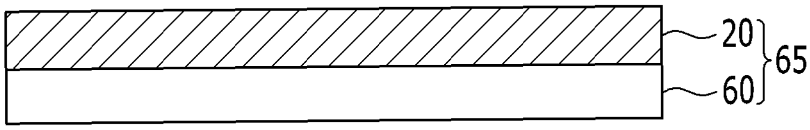


FIG. 3

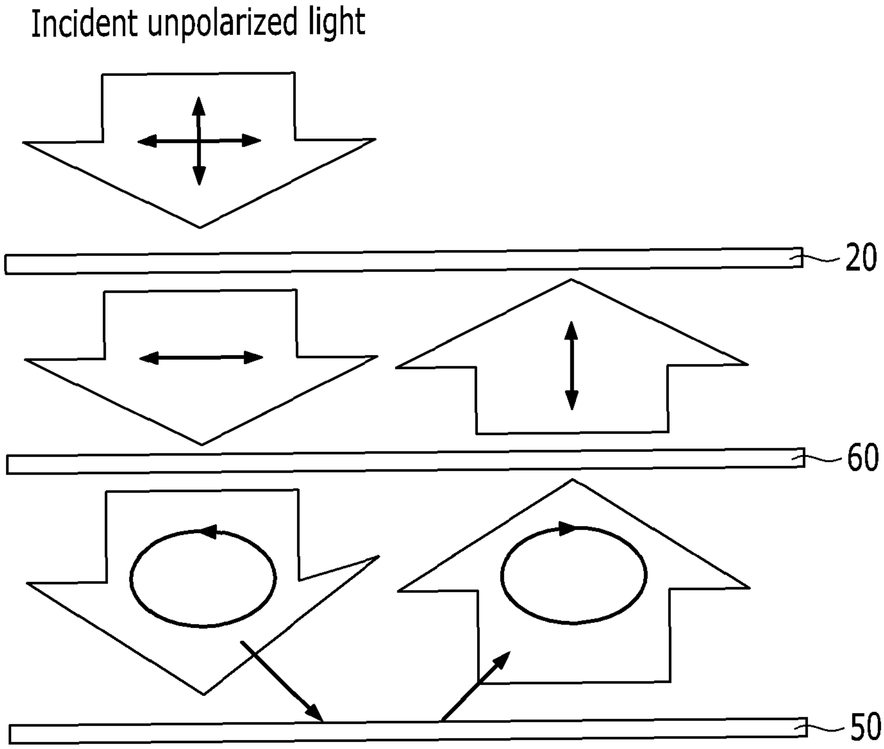

FIG. 4

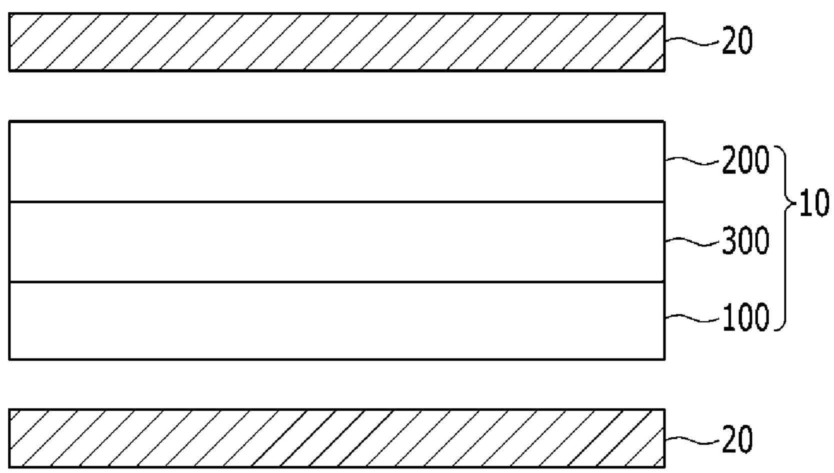

FIG. 5

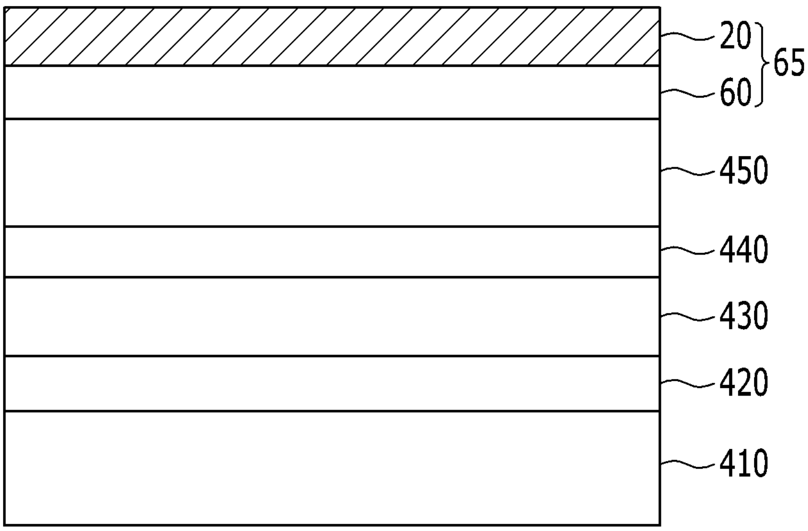

FIG. 6

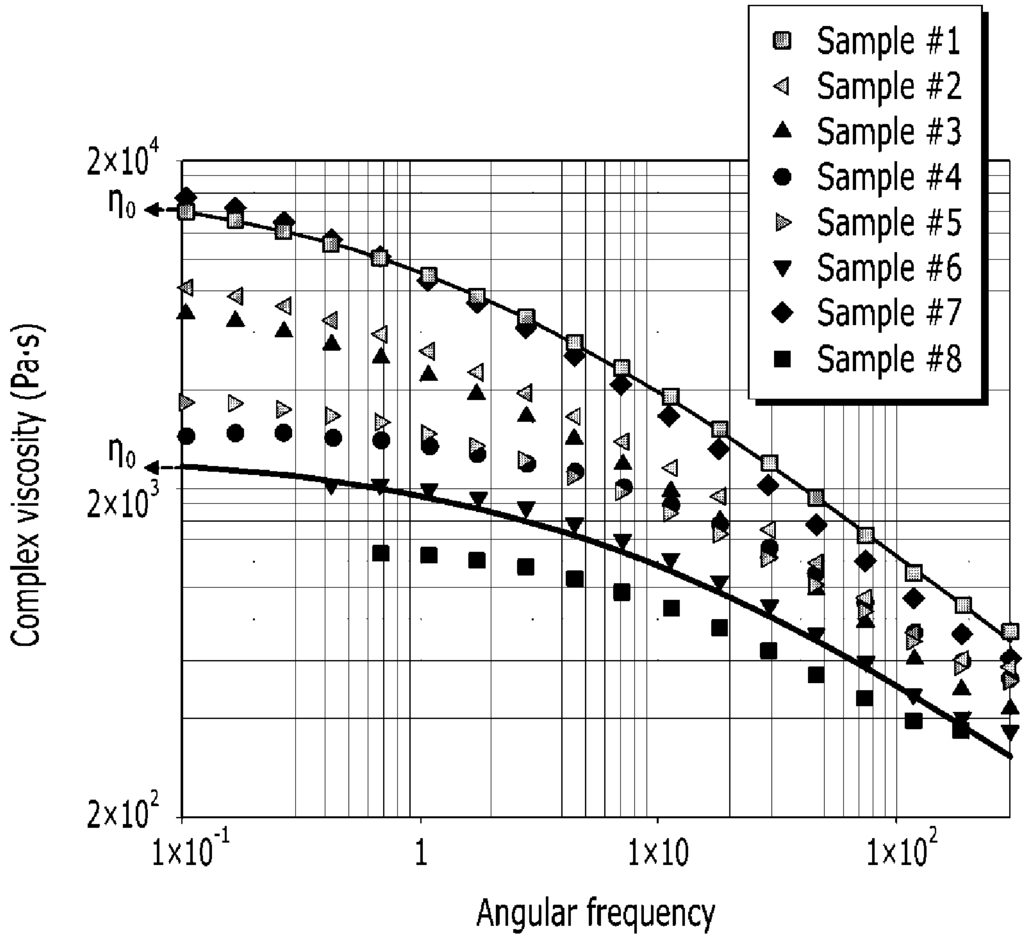
Sample #1
Sample #2
Sample #3
Sample #4
Sample #5
Sample #6
Sample #7
Sample #8
2×10^4
η0
η0
2×10^3
2×10^2
Complex viscosity (Pa·s)
1×10^-1
1
1×10
1×10^2
Angular frequency

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2014124714 A
- US 2012050652 A